(19) Europäisches Patentamt / European Patent Office / Office européen des brevets

(11) **EP 3 447 995 B1**

(12) **EUROPEAN PATENT SPECIFICATION**

(45) Date of publication and mention
of the grant of the patent:
**15.09.2021 Bulletin 2021/37**

(21) Application number: **17785728.1**

(22) Date of filing: **23.03.2017**

(51) Int Cl.:
*H04L 29/08* ^(2006.01)     *H04L 29/06* ^(2006.01)

(86) International application number:
**PCT/JP2017/011734**

(87) International publication number:
**WO 2017/183386 (26.10.2017 Gazette 2017/43)**

(54) **INFORMATION PROCESSING DEVICE, INFORMATION PROCESSING METHOD AND PROGRAM**

INFORMATIONSVERARBEITUNGSVORRICHTUNG,
INFORMATIONSVERARBEITUNGSVERFAHREN UND PROGRAMM

DISPOSITIF DE TRAITEMENT D'INFORMATIONS, PROCÉDÉS ET PROGRAMME DE
TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2016 JP 2016085126**

(43) Date of publication of application:
**27.02.2019 Bulletin 2019/09**

(73) Proprietor: **Sony Group Corporation
Tokyo 108-0075 (JP)**

(72) Inventors:
• **NISHIYAMA, Fumihiro
  Tokyo 108-0075 (JP)**
• **NAKAHARA, Kentaro
  Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
**JP-A- H0 774 848     JP-A- 2005 260 939**

• **David Tipper: "Wireless Personal Area
Networks", University of Pittsburgh , 28 January
2014 (2014-01-28), pages 1-59, XP002789661,
Retrieved from the Internet:
URL:http://www.pitt.edu/~dtipper/2700/2700
_Slides11K.pdf [retrieved on 2019-03-13]**

## Description

Technical Field

The present technology relates to an information processing apparatus used as, for example, a terminal for a human body communication system, and to an information processing method and a program.

Background Art

For example, in ISO17982 or the like that is an international standard regarding a human body communication to perform communication by using a human body as a transmission medium, a packet of a connection request for establishing a connection between terminals does not secure a sufficient size for a field for storing an ID of a terminal serving as a connection request source or request destination. For example, in the ISO17982, the field for storing the ID of the terminal serving as a connection request source or request destination has the size of 5 bits. Therefore, only 64 kinds of IDs can be assigned to the terminal. In this regard, a countermeasure to compress an ID of 6 bits or more assigned to a device into 5 bits and then store the ID in the field, and the like are conceivable.

Patent Literature 1 describes that a bit number of the ID is compressed by using a function in order to suppress power consumption for ID transmission. Further, in Patent Literature 1, when a conflict of the abbreviated IDs due to overlap of the abbreviated IDs between a plurality of terminals is detected, a different abbreviated ID is regenerated by using a different function.

David Tipper: "Wireless Personal Area Networks", 28 January 2014, URL:http://www.pitt.edu/~dtipper/2700/2700_Slides11K.pdf, retrieved from the Internet on 13 March 2019, relates to an information processing apparatus comprising a communication interface that communicates with another information processing apparatus and a control circuit to receive a connection request through the communication interface.

Citation List

Patent Literature

Patent Literature 1: Japanese Patent Application Laid-open No. 2015-18959

Disclosure of Invention

Technical Problem

For example, as in the ISO17982, in a case where a packet format used to transmit a connection request for establishing a connection between terminals does not secure a sufficient size for a field for storing an ID of a connection request source or request destination, there remains a possibility that various problems occur due to the conflict of the abbreviated IDs between terminals, the abbreviated IDs being abbreviated to have the field size described above ,and countermeasures therefor are anticipated.

It is an object of the present technology to solve various problems of a communication method in which a sufficient size is not secured for a field for storing an ID of a terminal being a connection request source or request destination.

Solution to Problem

According to a first aspect, the invention provides an information processing apparatus in accordance with independent claim 1. According to a second aspect, the invention provides an information processing method in accordance with independent claim 6. According to a third aspect, the invention provides a computer program in accordance with independent claim 7. Further aspects of the invention are set forth in the dependent claims, the drawings and the following description.

In order to solve the problems described above, an information processing apparatus according to an embodiment of the present technology includes: a communication interface that communicates with another information processing apparatus; and a control circuit configured to receive a connection request through the communication interface, the connection request including an abbreviated ID generated from a terminal ID for identifying either one of an information processing apparatus being a connection request source and an information processing apparatus being a connection request destination, transmit a connection response to the connection request, and set, in a case where a connection with the information processing apparatus being the request source is established and then terminated after the terminal IDs are exchanged with each other, a connection-response-limited state where transmission of the connection response to the connection request from the information processing apparatus being the request source is limited for a given time.

In the information processing apparatus, the abbreviated ID included in the connection request may be an abbreviated ID generated from the terminal ID for identifying the information processing apparatus being the connection request destination, and the control circuit may be configured to hold content of the connection request, and restrain, in a case where content of a connection request newly received coincides with the held content in the connection-response-limited state, transmission of a connection response to the connection request newly received.

In the information processing apparatus, the content of the connection request to be held is assumed to include the abbreviated ID, information that specifies a time slot, and information that specifies a frequency channel.

Further, in the information processing apparatus, the abbreviated ID included in the connection request may be an abbreviated ID generated from the terminal ID for identifying the information processing apparatus being the connection request source, and the control circuit may be configured to hold the abbreviated ID of the information processing apparatus being the request source that is the connection-response-limited target, and restrain, in a case where the abbreviated ID included in a connection request newly received coincides with the held abbreviated ID, transmission of a connection response to the connection request newly received.

The control circuit may be configured to manage, for each of the abbreviated IDs, a remaining time during which the transmission of the connection response is restrained.

Further, the control circuit may be configured to store the abbreviated ID in 5 bits from t28 to t32 in a packet format for a connection request and to transmit the abbreviated ID, the packet format being defined in ISO17982.

An information processing method according to another embodiment of the present technology includes: by a control circuit, receiving a connection request through a communication interface, the connection request including an abbreviated ID generated from a terminal ID for identifying either one of an information processing apparatus being a connection request source and an information processing apparatus being a connection request destination; transmitting a connection response to the connection request; and limiting, in a case where a connection with the information processing apparatus being the request source is established and then terminated after the terminal IDs are exchanged with each other, transmission of the connection response to the connection request from the information processing apparatus being the request source for a given time.

A program according to another embodiment of the present technology is a program causing a computer to operate as a control circuit that receives a connection request through a communication interface, the connection request including an abbreviated ID generated from a terminal ID for identifying either one of an information processing apparatus being a connection request source and an information processing apparatus being a connection request destination, transmits a connection response to the connection request, and sets, in a case where a connection with the information processing apparatus being the request source is established and then terminated after the terminal IDs are exchanged with each other, a connection-response-limited state where transmission of the connection response to the connection request from the information processing apparatus being the request source is limited for a given time.

Advantageous Effects of Invention

As described above, according to the present technology, it is possible to solve various problems of a communication method in which a sufficient size is not secured for a field for storing an ID of a terminal being a connection request source or request destination.

Brief Description of Drawings

[Fig. 1] Fig. 1 is a sequence diagram showing a procedure for establishing a connection between terminals defined by ISO17982.
[Fig. 2] Fig. 2 is a diagram showing a packet format for a connection request defined by the ISO17982.
[Fig. 3] Fig. 3 is a sequence diagram for describing a problem caused by the connection request that stores an abbreviated ID in an extended-ID field.
[Fig. 4] Fig. 4 is a diagram showing a configuration of a communication system 100 using an information processing apparatus of a first embodiment according to the present technology.
[Fig. 5] Fig. 5 is a block diagram showing a hardware configuration of the information processing apparatus included in the communication system 100 of Fig. 4.
[Fig. 6] Fig. 6 is a flowchart in a case where a CPU 11 of the information processing apparatus of Fig. 5 operates as a terminal that transmits a connection request.
[Fig. 7] Fig. 7 is a flowchart in a case where the CPU 11 of the information processing apparatus of Fig. 5 operates as a terminal that receives a connection request and transmits a connection response.
[Fig. 8] Fig. 8 is a sequence diagram of a first operation example in the communication system 100 of the first embodiment.
[Fig. 9] Fig. 9 is a flowchart in a case where the CPU 11 operates as a terminal that transmits a connection request in a second operation example.
[Fig. 10] Fig. 10 is a flowchart in a case where the CPU 11 operates as a terminal that receives a connection request and transmits a connection response in the second operation example.
[Fig. 11] Fig. 11 is a sequence diagram of the second operation example.
[Fig. 12] Fig. 12 shows an example of a connection-response-limitation management table.

Mode(s) for Carrying Out the Invention

Hereinafter, an embodiment according to the present technology will be described with reference to the drawings.

[General Outline]

First, description will be given on a packet format for a connection request, which is defined in ISO17982 that is an international standard regarding a human body communication to perform communication by using a human body as a transmission medium.

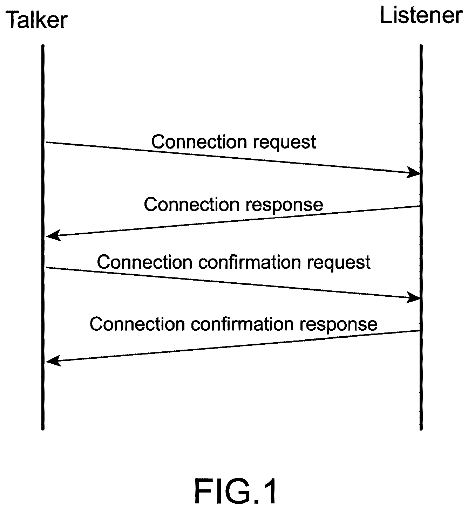

Fig. 1 is a sequence diagram showing a procedure for establishing a connection between terminals (Taker, Listener) defined in ISO17982.

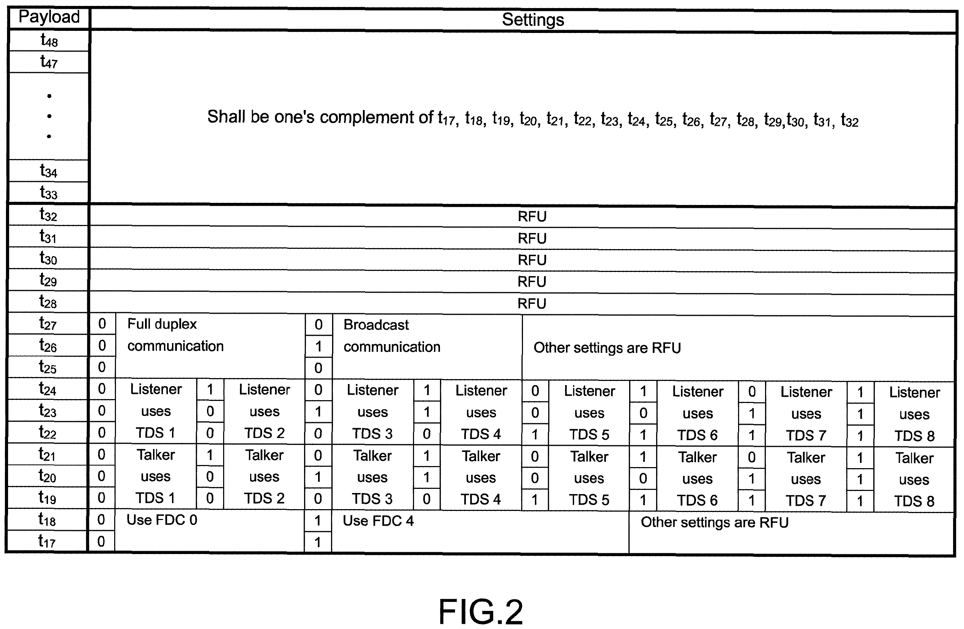

Here, a Taker is a terminal being a connection request source, and a Listener is a terminal that receives a connection request and transmits a response to the Taker. The Taker transmits a connection request having the packet format shown in Fig. 2 to the Listener. When receiving the connection request, the Listener transmits a connection response to the Taker. When receiving the connection response from the Listener, the Taker transmits, to the Listener, a connection confirmation request for confirming the connection response. When receiving the connection confirmation request from the Taker, the Listener transmits a connection confirmation response having the packet format shown in Fig. 2 to the Taker. After the connection between the terminals is established, unique IDs (higher-level layer IDs) of the respective terminals are exchanged between the terminals, and it is determined whether the connected terminal being a request destination is the connection party intended by the request source or not. When it is determined that the connected terminal is the intended connection party, target data are exchanged between the terminals. When it is determined that the connected terminal is not the intended connection party, a disconnection request is transmitted from the connection source terminal to the connection destination terminal, and the connection is terminated.

By the way, in the packet format currently defined in ISO17982, which is shown in Fig. 2, a field for storing an ID that specifies a terminal is not defined. In this regard, in this embodiment, an abbreviated ID of 5 bits is generated from, for example, a higher-level layer ID (terminal ID) of 48 bits of the terminal by a method determined in a communication system, and 5 bits from t28 to t32, which are currently set as reserves having the packet format shown in Fig. 2, are used as an extended-ID field for storing an abbreviated ID of the terminal of either one of the request source and the request destination.

Additionally, 3 bits from t25 to t27, which are currently defined as a field for specifying a data communication method in the ISO17982, are used to specify whether an abbreviated ID to be stored in this extended-ID field is an abbreviated ID of the terminal of the request source or the request destination. For example, in a case where (t25, t26, t27) = (1, 0, 0), this means that the extended-ID field stores an abbreviated ID of the terminal of the request source. In a case where (t25, t26, t27) = (1, 0, 1), this means that the extended-ID field stores an abbreviated ID of the terminal of the request destination.

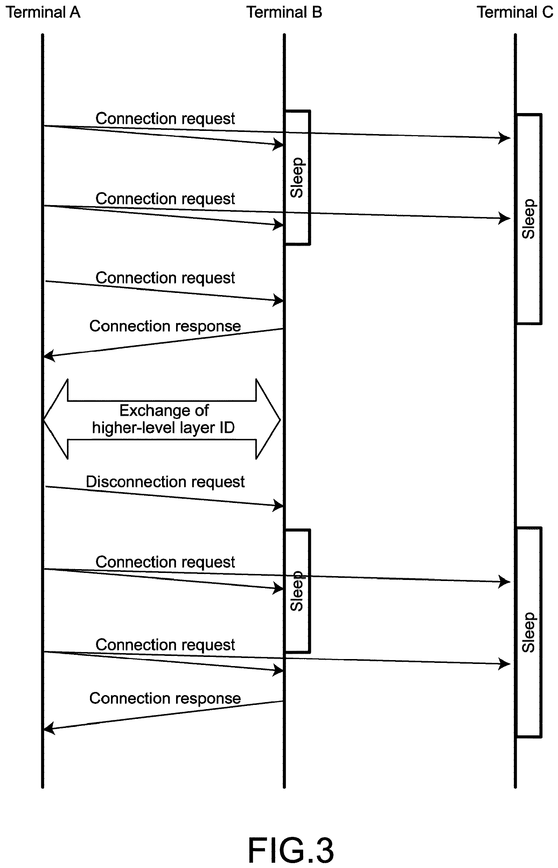

It should be noted that, in the packet format shown in Fig. 2, 3 bits from t22 to t24 are the field for storing information for specifying a time slot used by the Listener. 3 bits from t19 to t21 are the field for storing information for specifying a time slot used by the Taker. 2 bits from t17 to t18 are the field for storing information for specifying a frequency channel used by the Taker and the Listener.

Next, a problem caused by the connection request that stores an abbreviated ID in the extended-ID field as described above will be described with reference to Fig. 3. It should be noted that in Fig. 3 the connection confirmation request and the connection confirmation response will be omitted.

It is assumed that a communication system includes three terminals A, B, and C, and the terminal A being a request source transmits a connection request that stores an abbreviated ID of the terminal C being a target connection destination in the extended-ID field.

The abbreviated ID is created by shortening a higher-level layer ID, and thus there is a possibility that the same abbreviated ID is generated from different higher-level layer IDs. In this embodiment, it is assumed that an abbreviated ID of the terminal B and an abbreviated ID of the terminal C are the same.

The connection request from the terminal A being the request source is received by the terminal B and the terminal C, which have the same abbreviated ID. On those, a terminal that first returns a connection response and the terminal A being the request source establish a connection and exchange higher-level layer IDs. Here, it is assumed that the terminal B first transmits a connection response to the connection request from the terminal A being the request source, and the exchange of the higher-level layer IDs is performed between the terminal A and the terminal B.

The terminal A being the request source transmits a disconnection request to the terminal B and terminates the connection, because the higher-level layer ID acquired from the terminal B is different from a higher-level layer ID of the terminal C being the target request destination.

After the connection with the terminal B is terminated, the terminal A being the request source transmits again a connection request that stores the abbreviated ID of the terminal C in the extended-ID field, in expectation of a connection with the terminal C being the target request destination. However, since the abbreviated IDs of the terminal B and the terminal C are the same, there is a possibility that the connection and the disconnection with the terminal B are repeated again, and it takes time until a connection between the terminal A and the terminal C being the target request destination is established.

In order to solve such a problem, an information processing apparatus (terminal) 10 of this embodiment includes: a communication interface 13 that communicates with another information processing apparatus (terminal); and a CPU 11 configured to receive a connection request through the communication interface 13, the connection request including an abbreviated ID generated from a higher-level layer ID for identifying either one of an information processing apparatus being a connection request source and an information processing apparatus being a connection request destination, transmit a connection response to the connection request, and set, in a case where a connection with the information processing apparatus being the request source is established and then terminated after the terminal IDs are exchanged with each other, a connection-response-limited state where transmission of the connection response to the connection request from the information processing apparatus being the request source is limited for a given time.

Hereinafter, the information processing apparatus 10 of this embodiment will be described in detail.

<First Embodiment>

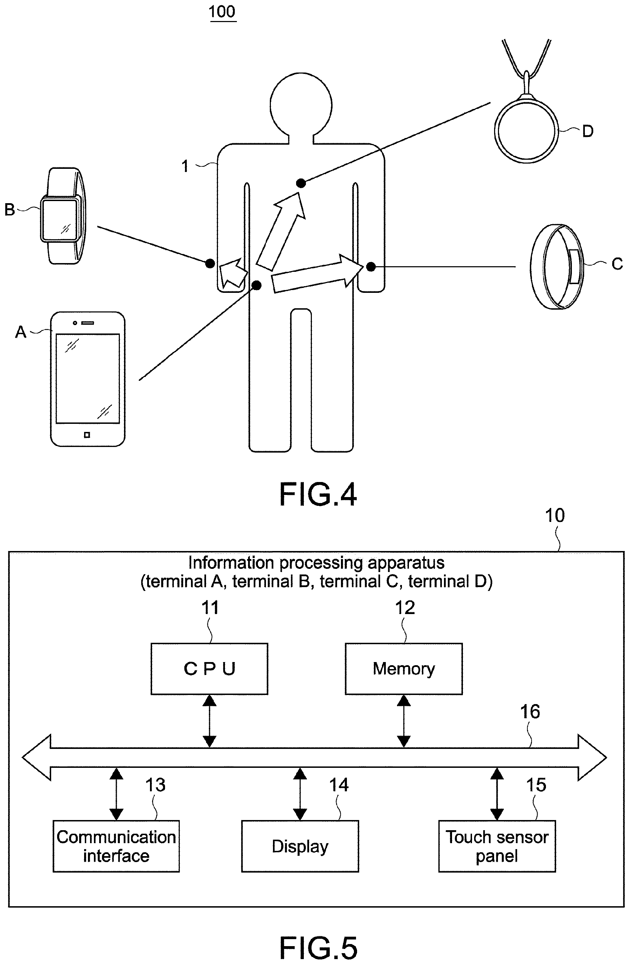

Fig. 4 is a diagram showing a configuration of a communication system 100 using an information processing apparatus of this embodiment.

As shown in the figure, the communication system 100 includes a plurality of information processing apparatuses A, B, C, and D corresponding to the terminals described above. Hereinafter, in a case where the information processing apparatuses A, B, C, and D are individually described, they are referred to as a terminal A, a terminal B, a terminal C, and a terminal D, respectively.

The information processing apparatuses (terminal A, terminal B, terminal C, terminal D) can communicate with one another by using a human body 1 as a medium. The communication system 100 basically includes a plurality of information processing apparatuses (terminal A, terminal B, terminal C, and terminal D) that can be carried or worn by an individual user. In this case, the information processing apparatuses (terminal A, terminal B, terminal C, and terminal D) may have various forms, e.g., a smartphone, a tablet terminal, an information terminal having a watch/wristband shape, a pendant-shaped information terminal, and other forms. For example, one terminal A in the communication system 100 establishes a connection with the other terminal B, terminal C, and terminal D in the communication system 100 by communication using the human body 1 as a medium, and exchanges data with the terminal B, the terminal C, and the terminal D that establish the communication with the terminal A.

Fig. 5 is a block diagram showing a hardware configuration of each information processing apparatus (terminal A, terminal B, terminal C, and terminal D) included in the communication system 100.

Each information processing apparatus (terminal A, terminal B, terminal C, and terminal D) 10 includes a CPU 11, a memory 12, a communication interface 13, a display 14, a touch sensor panel 15, a system bus 16, and the like.

The CPU 11 corresponds to a control circuit of the information processing apparatus according to the present technology and executes predetermined arithmetic processing and control of the respective units on the basis of a program stored in the memory 12.

The memory 12 stores a program necessary for the arithmetic processing and the control by the CPU 11, data, and the like.

The communication interface 13 communicates with the other information processing apparatuses (terminal B, terminal C, and terminal D) included in the communication system 100.

The display 14 displays various types of information.

The touch sensor panel 15 is disposed on the screen of the display 14 and receives an input operation from a user in cooperation with a GUI displayed on the display 14.

The CPU 11 is configured to execute the following operation according to, for example, a program stored in the memory 12.

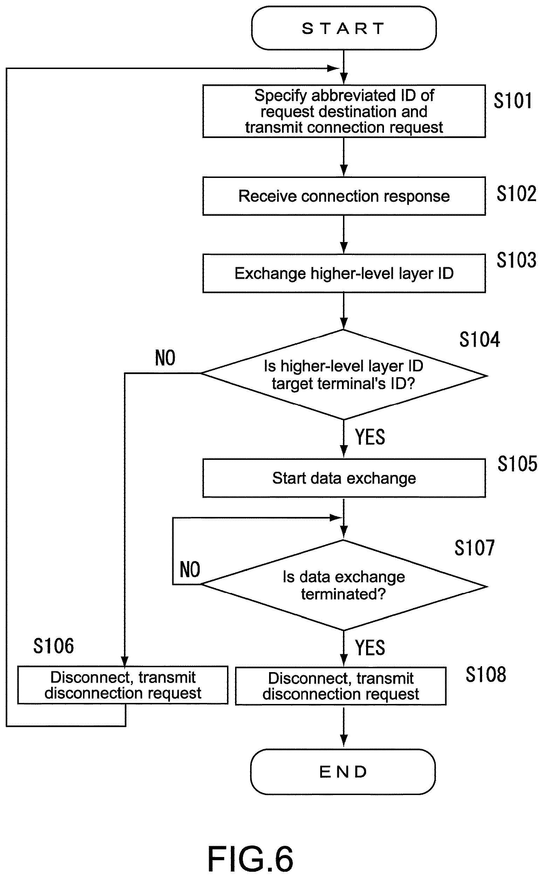

Fig. 6 is a flowchart in a case where the CPU 11 operates as a terminal that transmits a connection request.

First, the CPU 11 generates an abbreviated ID from a higher-level layer ID of a terminal of a target request destination and transmits a connection request that stores the abbreviated ID in an extended-ID field having a packet format defined in ISO17982 (Step S101). Next, when receiving a connection response, which is transmitted from another terminal that has received the connection request (Step S102), the CPU 11 establishes a connection with that terminal and exchanges higher-level layer IDs therewith (Step S103).

Next, the CPU 11 compares the higher-level layer ID acquired from the other terminal with which the connection is established, with the higher-level layer ID of the terminal of the target request destination (Step S104). When the higher-level layer IDs coincide with each other (YES in Step S104), the CPU 11 continuously exchanges target data with the other terminal (Step S105). When the higher-level layer IDs do not coincide with each other (NO in Step S104), the CPU 11 transmits a disconnection request to the other terminal so as to terminate the connection with the other terminal (Step S106) and returns to Step S101 described above to repeat the transmission of the connection request again. Further, when terminating the exchange of the target data with the other terminal (YES in Step S107), the CPU 11 transmits a disconnection request to the other terminal so as to terminate the connection with the other terminal (Step S108) and terminates the operation.

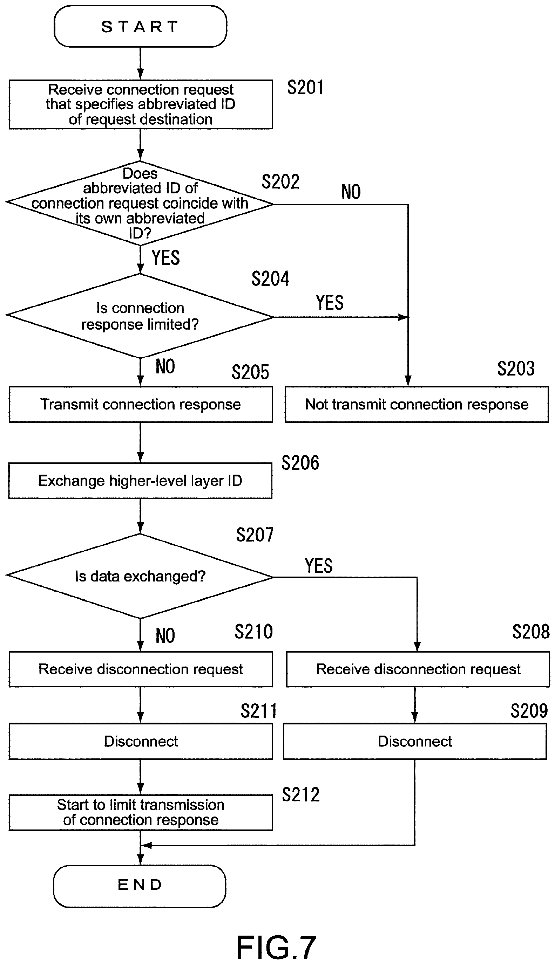

Fig. 7 is a flowchart in a case where the CPU 11 operates as a terminal that receives a connection request and transmits a connection response.

When the CPU 11 of the terminal receives a connection request from another terminal (Step S201), the CPU 11 determines whether an abbreviated ID included in that connection request coincides with its own abbreviated ID or not (Step S202). When determining that the abbreviated ID included in the connection request does not coincide with its own abbreviated ID, the CPU 11 does not transmit a connection response (Step S203). Further, when determining that the abbreviated ID included in the connection request coincides with its own abbreviated ID, the CPU 11 determines whether the terminal is currently in a connection-response-limited state or not (Step S204). When the terminal is currently in a connection-response-limited state, the CPU 11 does not transmit a connection response (Step S203). When determining that the terminal is not currently in a connection-response-limited state, the CPU 11 transmits a connection response (Step S205).

After transmitting the connection response, the CPU 11 establishes a connection with the terminal being the request source and exchanges higher-level layer IDs therewith (Step S206). After that, when receiving a disconnection request from the terminal being the request source (Step S208), the CPU 11 determines whether data has been exchanged with the terminal being the request source or not before the reception of the disconnection request. When receiving a disconnection request after the data exchange (YES in Step S207, Step S208), the CPU 11 terminates the connection (Step S209) and terminates the operation.

Further, when receiving a disconnection request before data is exchanged (NO in Step S207, Step S210), the CPU 11 terminates the connection (Step S211) and holds, in the memory 12, content of the connection request, e.g., a payload part from t17 to t27 or from t17 to t32 in the packet format shown in Fig. 2. The CPU 11 then enters a connection-response-limited state where transmission of a connection response to the connection request from the terminal of the same request source is restrained (Step S212).

Since the CPU 11 of each information processing apparatus (terminal A, terminal B, terminal C, and terminal D) is configured to operate as described above, the transmission/reception of a connection request, the transmission/reception of a connection response, the establishment of a connection, the data exchange, and the transmission/reception of a disconnection request become unnecessary to be repeated various times between the two terminals that have terminated the connection. With this configuration, a time required for a terminal being a request source until a connection with a terminal being a target request destination is established is shortened, and connection efficiency of the entire system is improved.

(Operation Example of Communication System 100 of This Embodiment)

Next, an operation example of a connection between the terminals in the communication system 100 will be described.

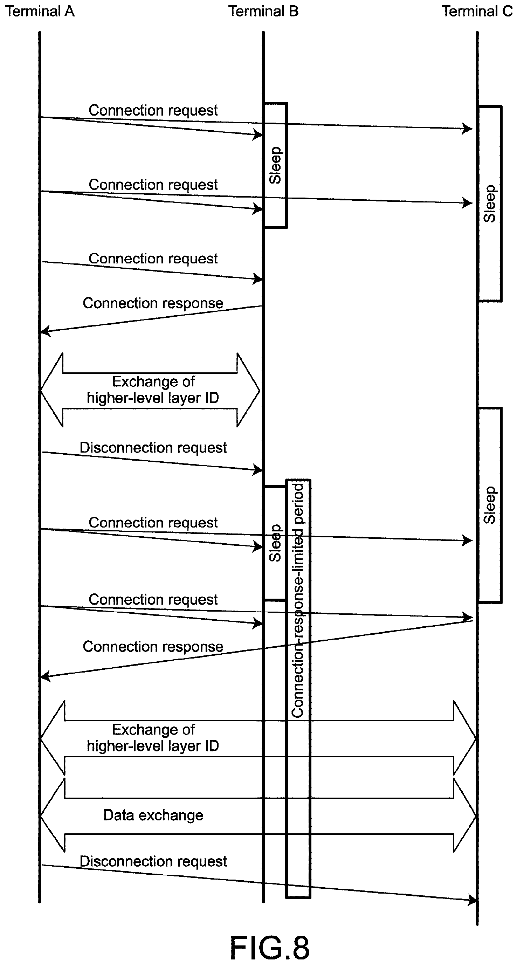

Fig. 8 is a sequence diagram of a first operation example of a connection between the terminals in the communication system 100 of this embodiment.

In the first operation example, it is assumed that the terminal A transmits a connection request to the terminal C being a target request destination. The terminal B and the terminal C have the same abbreviated ID. Further, the terminal B and the terminal C that wait for a connection request enter a sleep state periodically or intermittently according to a preset condition for the purpose of power saving. In this sleep state, the terminal B and the terminal C do not receive a connection request or do not return a connection response even if the terminal B and the terminal C receive the connection request. It should be noted that the terminals A, B, and C are assumed to know the higher-level layer IDs of all the terminals A, B, and C included in the communication system 100. The method of generating the abbreviated ID from the higher-level layer ID is common to the terminals.

First, the CPU 11 of the terminal A being the request source generates an abbreviated ID from the higher-level layer ID of the terminal C being the request destination by the common method in the communication system 100, and transmits a connection request that stores the abbreviated ID in the extended-ID field.

At that time, it is assumed that each of the terminal B and the terminal C is in the sleep state.

In this case, the CPU 11 of the terminal A being the request source transmits the same connection request again because a given time has elapsed and a connection response has not come back thereto. This operation is repeated, for example, until a connection response is received.

When the terminal B, which is not the request destination, is first restored from the sleep state, the CPU 11 of the terminal B determines whether the terminal B is currently in the connection-response-limited state or not, because the abbreviated ID included in the connection request from the terminal A coincides with the abbreviated ID of the terminal B. In this operation example, the CPU 11 of the terminal B determines that the terminal B is not currently in the connection-response-limited state and transmits a connection response. When receiving the connection response, the CPU 11 of the terminal A establishes a connection in higher-level layer with the terminal B and exchanges the higher-level layer ID with the terminal B.

When the CPU 11 of the terminal A determines whether or not the higher-level layer ID of the terminal B, which is acquired from the terminal B, coincides with the higher-level layer ID of the terminal C being the target request destination. Since the terminal connected this time is the terminal B that is not the target request destination, the CPU 11 of the terminal A transmits a disconnection request to the terminal B through the connection in higher-level layer established with the terminal B.

When receiving the disconnection request, the CPU 11 of the terminal B terminates the connection with the terminal A and enters the connection-response-limited state with respect to the connection request from the terminal A. Here, the connection-response-limited state with respect to the connection request from the terminal A means a state where a connection response to the same connection request from the terminal A is not to be transmitted. In order to determine whether a connection request is the same connection request from the terminal A or not, the CPU 11 of the terminal B stores, in the memory 12, content of the connection request received at last time, e.g., a payload part from t17 to t27 or from t17 to t32 in the packet format shown in Fig. 2, and compares it with the same payload part in a connection request newly received. In a case where the content of both the payload parts coincide with each other, it is determined that the connection request is the same connection request from the terminal A.

After transmitting the disconnection request to the terminal B, the CPU 11 of the terminal A repeats transmission of the same connection request again until a connection response comes back thereto. At that time, even when the terminal B receives that connection request, the terminal B does not transmit a connection response because of being in the connection-response-limited state. Therefore, the terminal C being the target request destination obtains an opportunity to receive a connection request and transmit a connection response to the terminal A.

When receiving the connection response from the terminal C being the target request destination, the CPU 11 of the terminal A establishes a connection in higher-level layer with the terminal C and exchanges the higher-level layer ID with the terminal C. Since the terminal connected this time is the terminal C being the target request destination, the CPU 11 of the terminal A performs data exchange, which is the ultimate purpose of the connection request in this time, through the connection in higher-level layer established with the terminal B. When the data exchange is terminated, the CPU 11 of the terminal A transmits a disconnection request to the terminal C through the connection in higher-level layer established with the terminal C. When receiving the disconnection request, the CPU 11 of the terminal C terminates the connection with the terminal A.

(Second Operation Example)

Next, as a second operation example, description will be given on an operation in a case where the CPU 11 of the terminal A transmits a connection request that stores an abbreviated ID thereof in the extended-ID field for the purpose of collecting higher-level layer IDs of other terminals, for example.

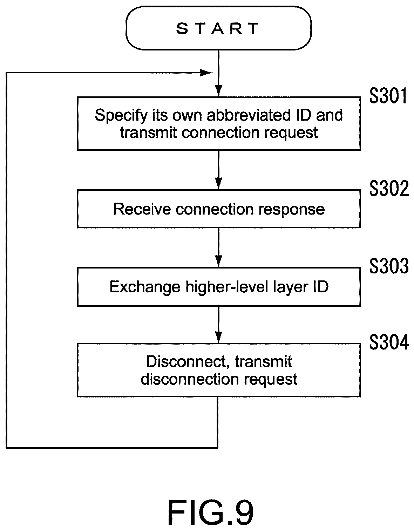

Fig. 9 is a flowchart in a case where the CPU 11 operates as a terminal that transmits a connection request in the second operation example.

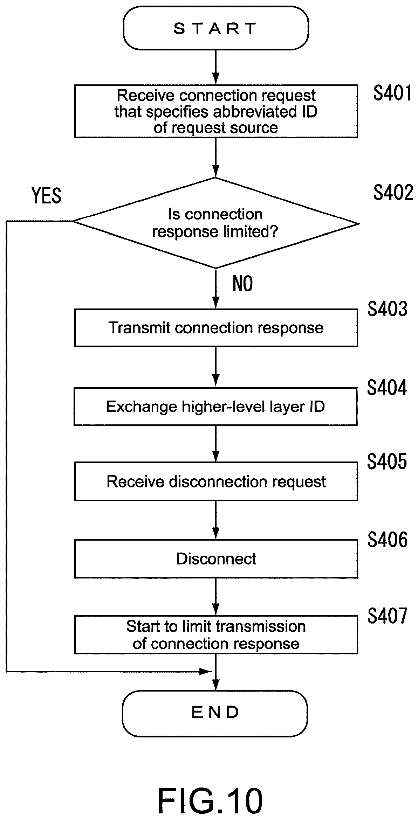

Fig. 10 is a flowchart in a case where the CPU 11 operates as a terminal that receives the connection request and transmits a connection response in the second operation example.

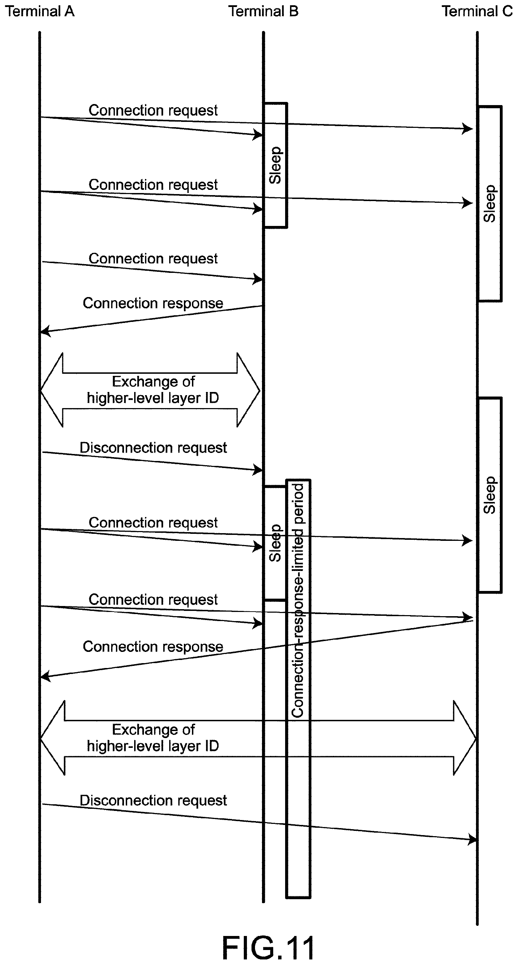

Fig. 11 is a sequence diagram of the second operation example of a connection between the terminals in the communication system 100 of this embodiment.

Also in this second operation example, the terminal B and the terminal C have the same abbreviated ID. Further, the terminal B and the terminal C that wait for a connection request enter a sleep state periodically or intermittently according to a preset condition for the purpose of power saving. In this sleep state, the terminal B and the terminal C do not receive a connection request or do not return a connection response even if the terminal B and the terminal C receive the connection request.

First, the CPU 11 of the terminal A being the request source generates an abbreviated ID from a higher-level layer ID of the terminal A by a common method in this communication system 100, and transmits a connection request that stores the abbreviated ID in the extended-ID field (Step S301 in Fig. 9).

At that time, it is assumed that each of the terminal B and the terminal C is in the sleep state.

In this case, the CPU 11 of the terminal A being the request source transmits the same connection request again because a given time has elapsed and a connection response has not come back thereto.

When the terminal B is first restored from the sleep state and receives the connection request from the terminal A (Step S401 in Fig. 10), the terminal B determines whether the terminal B is currently in the connection-response-limited state or not (Step S402 in Fig. 10). When determining that the terminal B is not currently in the connection-response-limited state, the CPU 11 of the terminal B transmits a connection response (Step S403 in Fig. 10).

When receiving the connection response (Step S302 in Fig. 9), the CPU 11 of the terminal A establishes a connection in higher-level layer with the terminal B, which has transmitted that connection response, and exchanges the higher-level layer ID with the terminal B (Step S303 in Fig. 9, Step S404 in Fig. 10).

After storing in the memory 12 the higher-level layer ID of the terminal B, which has been acquired from the terminal B, the CPU 11 of the terminal A transmits a disconnection request to the terminal B through the connection in higher-level layer (Step S304 in Fig. 9). Subsequently, the CPU 11 of the terminal A transmits again a connection request that stores the abbreviated ID thereof in the extended-ID field, for the purpose of searching for another terminal.

Meanwhile, when receiving the disconnection request (Step S405 in Fig. 10), the CPU 11 of the terminal B terminates the connection with the terminal A (Step S406 in Fig. 10) and enters the connection-response-limited state (Step S407 in Fig. 10).

Even when the CPU 11 of the terminal B receives the connection request transmitted from the terminal A for the purpose of searching for another terminal, the CPU 11 of the terminal B does not transmit a connection response to that connection request because of being in the connection-response-limited state. Thus, another terminal C obtains an opportunity to receive a connection request and transmit a connection response to the terminal A.

When receiving the connection response from the terminal C, the CPU 11 of the terminal A establishes a connection in higher-level layer with the terminal C and exchanges the higher-level layer ID with the terminal C.

It should be noted that a connection-response-limited time t can be determined as follows, for example.

The connection-response-limited time t is determined by the following expression:

$$t = T1 \times N \times A$$

where T1 represents a theoretical value of a time required from the transmission of a connection request to the exchange of higher-level layer IDs, N represents the number of terminals included in the communication system 100, and A represents a coefficient considering a state of a transmission path or the like.

(Management of Connection-response-limited State)

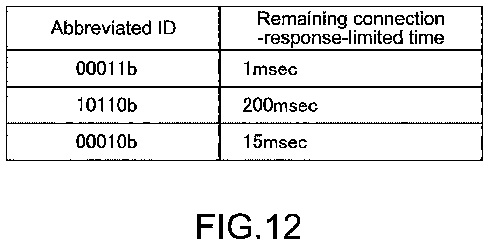

When entering the connection-response-limited state, the CPU 11 of the terminal sets an abbreviated ID of a target terminal for which a connection response is to be limited (abbreviated ID of a terminal of a request source, which is stored in the extended-ID field of the connection request), and the remaining connection-response-limited time, in a connection-response-limitation management table prepared in the memory 12. Fig. 12 shows an example of the connection-response-limitation management table. The remaining connection-response-limited time may be a time of day.

In the connection-response-limitation management table, one or more pairs of the abbreviated ID and the remaining time may be set. In other words, at least, it is possible to set the pairs of the abbreviated ID and the remaining time in number corresponding to the number of other terminals in the communication system 100. A pair in which the remaining connection-response-limited time reaches zero is deleted from the connection-response-limitation management table or invalidated.

When the connection-response-limitation management table is provided in such a manner, it is possible to manage the remaining connection-response-limited time with respect to a connection request for each terminal.

In such a manner, in the second operation example, the terminal that has exchanged the higher-level layer ID enters the connection-response-limited state for a determined time after the exchange, and thus does not transmit a connection response to a connection request to be subsequently transmitted from the terminal A. With this configuration, it is possible to prevent the connection and disconnection between the terminal A being the request source and the specific terminal B from being repeated in vain and prevent extra time from being spent for searching for a terminal in the communication system 100.

Reference Signs List

| A, B, C, D | terminal (information processing apparatus 10) |
| --- | --- |
| 10 | information processing apparatus |
| 11 | CPU |
| 12 | memory |
| 13 | communication interface |
| 14 | display |
| 15 | touch sensor panel |
| 16 | system bus |
| 100 | communication system |

**Claims**

1. An information processing apparatus, comprising:

a communication interface (13) that communicates with another information processing apparatus; and
a control circuit (11) configured to operate as an information processing apparatus that receives a connection request and transmits a connection response, the control circuit (11) being further configured to

receive a connection request through the communication interface (13), the connection request including an abbreviated ID generated from a terminal ID for identifying the information processing apparatus being a connection request destination,
transmit a connection response to the connection request to the other information processing apparatus,
set, in a case where a connection with the other information processing apparatus being the request source is established and then terminated after the terminal IDs are exchanged with each other, a connection-response-limited state where transmission of the connection response to the connection request from the other information processing apparatus being the request source is limited for a given time, and

the control circuit (11) configured to operate as an information processing apparatus that transmits a connection request, the control circuit (11) being further configured to
store the abbreviated ID in 5 bits from t28 to t32 in a packet format for the connection request and to transmit the abbreviated ID, the packet format being defined in ISO17982.

2. The information processing apparatus according to claim 1, wherein

the abbreviated ID included in the connection request is an abbreviated ID generated from the terminal ID for identifying the information processing apparatus being the connection request destination, and
the control circuit (11) is configured to

hold content of the connection request, and
restrain, in a case where content of a connection request newly received coincides with the held content in the connection-response-limited state, transmission of a connection response to the connection request newly received.

3. The information processing apparatus according to claim 2, wherein
the content of the connection request to be held includes the abbreviated ID, information that specifies a time slot, and information that specifies a frequency channel.

4. The information processing apparatus according to claim 1, wherein

the abbreviated ID included in the connection request is an abbreviated ID generated from the terminal ID for identifying the other information processing apparatus being the connection request source, and
the control circuit is configured to

hold the abbreviated ID of the other information processing apparatus being the request source that is the connection-response-limited target, and
restrain, in a case where the abbreviated ID included in a connection request newly received coincides with the held abbreviated ID, transmission of a connection response to the connection request newly received.

5. The information processing apparatus according to claim 4, wherein
the control circuit (11) is configured to manage, for each of the abbreviated IDs, a remaining time during which the transmission of the connection response is restrained.

6. An information processing method, comprising:

an information processing apparatus communicating with another information processing apparatus;
the information processing apparatus operating as an information processing apparatus that receives a connection request and transmits a connection response, wherein the information processing method further comprises
receiving a connection request through the communication interface (13), the connection request including an abbreviated ID generated from a terminal ID for identifying the information processing apparatus being a connection request destination,
transmitting a connection response to the connection request to the other information processing apparatus,
setting, in a case where a connection with the other information processing apparatus being the request source is established and then terminated after the terminal IDs are exchanged with each other, a connection-response-limited state where transmission of the connection response to the connection request from the other information processing apparatus being the request source is limited for a given time, and
the information processing apparatus operating as an information processing apparatus that transmits a connection request, wherein the information processing method further comprises storing the abbreviated ID in 5 bits from t28 to t32 in a packet format for a connection request and to transmit the abbreviated ID, the packet format being defined in ISO17982.

7. A computer program comprising instructions which, when the program is executed by a computer, cause the computer to carry out the method of claim 6.

**Patentansprüche**

1. Informationsverarbeitungsvorrichtung, umfassend:

eine Kommunikationsschnittstelle (13), die mit einer anderen Informationsverarbeitungsvorrichtung kommuniziert; und
eine Steuerschaltung (11), die ausgelegt ist, als Informationsverarbeitungsvorrichtung zu arbeiten, die eine Verbindungsanforderung empfängt und eine Verbindungsantwort überträgt, wobei die Steuerschaltung (11) ferner dazu ausgelegt ist
eine Verbindungsanforderung durch die Kommunikationsschnittstelle (13) zu empfangen, wobei die Verbindungsanforderung eine abgekürzte ID beinhaltet, die von einer Endgeräte-ID zum Identifizieren der Informationsverarbeitungsvorrichtung, die ein Ziel der Verbindungsanforderung ist, erzeugt wird,

eine Verbindungsantwort auf die Verbindungsanforderung an die andere Informationsverarbeitungsvorrichtung zu übertragen,

in einem Fall, in dem eine Verbindung mit der anderen Informationsverarbeitungsvorrichtung, die die Anforderungsquelle ist, hergestellt und dann beendet wird, nachdem die Endgeräte-IDs miteinander ausgetauscht wurden, einen Verbindungsantwort-begrenzten Zustand einzustellen, in dem das Übertragen der Verbindungsantwort auf die Verbindungsanforderung von der anderen Informationsverarbeitungsvorrichtung, die die Anforderungsquelle ist, für eine bestimmte Zeit begrenzt ist, und

die Steuerschaltung (11) dazu ausgelegt ist, als eine Informationsverarbeitungsvorrichtung zu arbeiten, die eine Verbindungsanforderung überträgt, wobei die Steuerschaltung (11) ferner dazu ausgelegt ist die abgekürzte ID in 5 Bits von t28 bis t32 in einem Paketformat für die Verbindungsanforderung zu speichern und die abgekürzte ID zu übertragen, wobei das Paketformat in ISO17982 definiert ist.

2. Informationsverarbeitungsvorrichtung nach Anspruch 1, wobei

die in der Verbindungsanforderung enthaltene abgekürzte ID eine aus der Endgeräte-ID erzeugte abgekürzte ID zum Identifizieren der Informationsverarbeitungsvorrichtung ist, die das Ziel der Verbindungsanforderung ist, und die Steuerschaltung (11) dazu ausgelegt ist den Inhalt der Verbindungsanforderung zu halten, und

in einem Fall, in dem der Inhalt einer neu empfangenen Verbindungsanforderung mit dem gehaltenen Inhalt im Zustand Verbindungsantwort-begrenzt übereinstimmt, das Übertragen einer Verbindungsantwort auf die neu empfangene Verbindungsanforderung zurückhalten.

3. Informationsverarbeitungsvorrichtung nach Anspruch 2, wobei
der Inhalt der zu haltenden Verbindungsanforderung die abgekürzte ID, Informationen, die einen Zeitschlitz vorgeben, und Informationen, die einen Frequenzkanal vorgeben, beinhaltet.

4. Informationsverarbeitungsvorrichtung nach Anspruch 1, wobei

die in der Verbindungsanforderung enthaltene abgekürzte ID eine aus der Endgeräte-ID erzeugte abgekürzte ID zum Identifizieren der anderen Informationsverarbeitungsvorrichtung, die die Verbindungsanforderungsquelle ist, und die Steuerschaltung dazu ausgelegt ist die abgekürzte ID der anderen Informationsverarbeitungsvorrichtung zu halten, die die Anforderungsquelle ist, die das Verbindungsantwortbegrenzte Ziel ist, und

in einem Fall, in dem die in einer neu empfangenen Verbindungsanforderung enthaltene abgekürzte ID mit der gehaltenen abgekürzten ID übereinstimmt, das Übertragen einer Verbindungsantwort auf die neu empfangene Verbindungsanforderung zurückzuhalten.

5. Informationsverarbeitungsvorrichtung nach Anspruch 4, wobei
die Steuerschaltung (11) dazu ausgelegt ist, für jede der abgekürzten IDs eine Restzeit zu verwalten, während der das Übertragen der Verbindungsantwort zurückgehalten wird.

6. Informationsverarbeitungsverfahren, umfassend:

eine Informationsverarbeitungsvorrichtung, die mit einer anderen Informationsverarbeitungsvorrichtung kommuniziert;

wobei die Informationsverarbeitungsvorrichtung als eine Informationsverarbeitungsvorrichtung arbeitet, die eine Verbindungsanforderung empfängt und eine Verbindungsantwort überträgt, wobei das Informationsverarbeitungsverfahren ferner umfasst Empfangen einer Verbindungsanforderung durch die Kommunikationsschnittstelle (13), wobei die Verbindungsanforderung eine abgekürzte ID beinhaltet, die von einer Endgeräte-ID zum Identifizieren der Informationsverarbeitungsvorrichtung, die ein Ziel der Verbindungsanforderung ist, erzeugt wird, Übertragen einer Verbindungsantwort auf die Verbindungsanforderung an die andere Informationsverarbeitungsvorrichtung,

in einem Fall, in dem eine Verbindung mit der anderen Informationsverarbeitungsvorrichtung, die die Anforderungsquelle ist, hergestellt und dann beendet wird, nachdem die Endgeräte-IDs miteinander ausgetauscht wurden, Einstellen eines Verbindungsantwort-begrenzten Zustands, in dem das Übertragen der Verbindungsantwort auf die Verbindungsanforderung von der anderen Informationsverarbeitungsvorrichtung, die die Anforderungsquelle ist, für eine bestimmte Zeit begrenzt ist, und

wobei die Informationsverarbeitungsvorrichtung als Informationsverarbeitungsvorrichtung arbeitet, die eine Verbindungsanforderung überträgt, wobei das Informationsverarbeitungsverfahren ferner umfasst Speichern der abgekürzten ID in 5 Bits von t28 bis t32 in einem Paketformat für eine Verbindungsanforderung und die abgekürzte ID zu übertragen, wobei das Paketformat in ISO17982 definiert ist.

7. Computerprogramm, umfassend Anweisungen, die, wenn das Programm von einem Computer ausgeführt wird, den Computer veranlassen, das Verfahren nach Anspruch 6 durchzuführen.

**Revendications**

1. Appareil de traitement d'informations, comprenant :

   une interface de communication (13) qui communique avec un autre appareil de traitement d'informations ; et
   un circuit de commande (11) configuré pour fonctionner comme un appareil de traitement d'informations qui reçoit une demande de connexion et transmet une réponse de connexion, le circuit de commande (11) étant en outre configuré pour
   recevoir une demande de connexion par l'intermédiaire de l'interface de communication (13), la demande de connexion comprenant un ID abrégé généré à partir d'un ID de terminal pour identifier l'appareil de traitement d'informations qui est une destination de demande de connexion,
   transmettre une réponse de connexion à la demande de connexion à l'autre appareil de traitement d'informations,
   établir, dans un cas où une connexion avec l'autre appareil de traitement d'informations étant la source de la demande est établie et ensuite terminée après que les ID de terminal ont été échangés l'un avec l'autre, un état limité à la réponse de connexion, où la transmission de la réponse de connexion à la demande de connexion depuis l'autre appareil de traitement d'informations étant la source de la demande est limitée pendant un temps donné, et
   le circuit de commande (11) configuré pour fonctionner comme un appareil de traitement d'informations qui transmet une demande de connexion, le circuit de commande (11) étant en outre configuré pour stocker l'ID abrégé en 5 bits, de t28 à t32, dans un format de paquet pour la demande de connexion, et transmettre l'ID abrégé, le format de paquet étant défini suivant la norme ISO17982.

2. Appareil de traitement d'informations selon la revendication 1, dans lequel

l'ID abrégé inclus dans la demande de connexion est un ID abrégé généré à partir de l'ID du terminal pour identifier l'appareil de traitement d'informations étant la destination de la demande de connexion, et
le circuit de commande (11) est configuré pour conserver le contenu de la demande de connexion, et retenir, dans un cas où le contenu d'une demande de connexion nouvellement reçue coïncide avec le contenu conservé dans l'état limité à la réponse de connexion, la transmission d'une réponse de connexion à la demande de connexion nouvellement reçue.

3. Appareil de traitement d'informations selon la revendication 2, dans lequel
le contenu de la demande de connexion à conserver inclut l'ID abrégé, des informations qui spécifient un créneau de temps et des informations qui spécifient un canal de fréquence.

4. Appareil de traitement d'informations selon la revendication 1, dans lequel

l'ID abrégé inclus dans la demande de connexion est un ID abrégé généré à partir de l'ID du terminal pour identifier l'autre appareil de traitement d'informations étant la source de la demande de connexion, et
le circuit de commande est configuré pour conserver l'ID abrégé de l'autre appareil de traitement d'informations étant la source de la demande qui est la cible limitée à la réponse de connexion, et
retenir, dans un cas où l'ID abrégé inclus dans une demande de connexion nouvellement reçue coïncide avec l'ID abrégé conservé, la transmission d'une réponse de connexion à la demande de connexion nouvellement reçue.

5. Appareil de traitement d'informations selon la revendication 4, dans lequel
le circuit de commande (11) est configuré pour gérer, pour chacun des ID abrégés, un temps restant pendant lequel la transmission de la réponse de connexion est retenue.

6. Procédé de traitement d'informations, comprenant un appareil de traitement d'informations communiquant avec un autre appareil de traitement d'informations ; l'appareil de traitement d'informations fonctionnant comme un appareil de traitement d'informations qui reçoit une demande de connexion et transmet une réponse de connexion, où le procédé de traitement d'informations comprend en outre les étapes suivantes :

   recevoir une demande de connexion par l'intermédiaire de l'interface de communication (13), la demande de connexion comprenant un ID abrégé généré à partir d'un ID de terminal pour identifier l'appareil de traitement d'informations qui est une destination de demande de connexion,

transmettre une réponse de connexion à la demande de connexion à l'autre appareil de traitement d'informations,

établir, dans un cas où une connexion avec l'autre appareil de traitement d'informations étant la source de la demande est établie et ensuite terminée après que les ID de terminal ont été échangés l'un avec l'autre, un état limité à la réponse de connexion, où la transmission de la réponse de connexion à la demande de connexion depuis l'autre appareil de traitement d'informations étant la source de la demande est limitée pendant un temps donné, et

l'appareil de traitement d'informations fonctionnant comme un appareil de traitement d'informations qui transmet une demande de connexion, où le procédé de traitement d'informations comprend en outre le stockage de l'ID abrégé en 5 bits, de t28 à t32, dans un format de paquet pour une demande de connexion et transmettre l'ID abrégé, le format de paquet étant défini suivant la norme ISO17982.

7. Programme informatique comprenant des instructions qui, lorsque le programme est exécuté par un ordinateur, amènent l'ordinateur à exécuter le procédé de la revendication 6.

Talker                                    Listener

Connection request

Connection response

Connection confirmation request

Connection confirmation response

# FIG.1

| Payload | Settings | | | | | | | | | | | | | | | |
|---|---|---|---|---|---|---|---|---|---|---|---|---|---|---|---|---|
| $t_{48}$ | | | | | | | | | | | | | | | | |
| $t_{47}$ | Shall be one's complement of $t_{17}$, $t_{18}$, $t_{19}$, $t_{20}$, $t_{21}$, $t_{22}$, $t_{23}$, $t_{24}$, $t_{25}$, $t_{26}$, $t_{27}$, $t_{28}$, $t_{29}$, $t_{30}$, $t_{31}$, $t_{32}$ | | | | | | | | | | | | | | | |
| • • • • | | | | | | | | | | | | | | | | |
| $t_{34}$ | | | | | | | | | | | | | | | | |
| $t_{33}$ | | | | | | | | | | | | | | | | |
| $t_{32}$ | RFU | | | | | | | | | | | | | | | |
| $t_{31}$ | RFU | | | | | | | | | | | | | | | |
| $t_{30}$ | RFU | | | | | | | | | | | | | | | |
| $t_{29}$ | RFU | | | | | | | | | | | | | | | |
| $t_{28}$ | RFU | | | | | | | | | | | | | | | |
| $t_{27}$ | 0 | Full duplex communication | | 0 | Broadcast communication | | Other settings are RFU | | | | | | | | | |
| $t_{26}$ | 0 | | | 1 | | | | | | | | | | | | |
| $t_{25}$ | 0 | | | 0 | | | | | | | | | | | | |
| $t_{24}$ | 0 | Listener uses TDS 1 | 1 | Listener uses TDS 2 | 0 | Listener uses TDS 3 | 1 | Listener uses TDS 4 | 0 | Listener uses TDS 5 | 1 | Listener uses TDS 6 | 0 | Listener uses TDS 7 | 1 | Listener uses TDS 8 |
| $t_{23}$ | 0 | | 0 | | 1 | | 1 | | 0 | | 0 | | 1 | | 1 | |
| $t_{22}$ | 0 | | 0 | | 0 | | 0 | | 1 | | 1 | | 1 | | 1 | |
| $t_{21}$ | 0 | Talker uses TDS 1 | 1 | Talker uses TDS 2 | 0 | Talker uses TDS 3 | 1 | Talker uses TDS 4 | 0 | Talker uses TDS 5 | 1 | Talker uses TDS 6 | 0 | Talker uses TDS 7 | 1 | Talker uses TDS 8 |
| $t_{20}$ | 0 | | 0 | | 1 | | 1 | | 0 | | 0 | | 1 | | 1 | |
| $t_{19}$ | 0 | | 0 | | 0 | | 0 | | 1 | | 1 | | 1 | | 1 | |
| $t_{18}$ | 0 | Use FDC 0 | | 1 | Use FDC 4 | | Other settings are RFU | | | | | | | | | |
| $t_{17}$ | 0 | | | 1 | | | | | | | | | | | | |

FIG.2

EP 3 447 995 B1

Terminal A                Terminal B                Terminal C

Connection request

Sleep

Connection request

Sleep

Connection request

Connection response

Exchange of
higher-level layer ID

Disconnection request

Connection request

Sleep

Connection request

Sleep

Connection response

# FIG.3

100

FIG.4

10

Information processing apparatus
(terminal A, terminal B, terminal C, terminal D)

11

12

C P U

Memory

16

13

14

15

Communication interface

Display

Touch sensor panel

FIG.5

START

Specify abbreviated ID of
request destination and
transmit connection request — S101

Receive connection response — S102

Exchange higher-level layer ID — S103

Is higher-level layer ID
target terminal's ID? — S104

NO

YES

Start data exchange — S105

Is data exchange
terminated? — S107

NO

YES

S106

Disconnect, transmit
disconnection request

Disconnect, transmit
disconnection request — S108

END

FIG.6

FIG.7

FIG.8

START

S301
Specify its own abbreviated ID and
transmit connection request

S302
Receive connection response

S303
Exchange higher-level layer ID

S304
Disconnect, transmit
disconnection request

FIG.9

FIG.10

FIG.11

| Abbreviated ID | Remaining connection -response-limited time |
|---|---|
| 00011b | 1msec |
| 10110b | 200msec |
| 00010b | 15msec |

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015018959 A

### Non-patent literature cited in the description

- **DAVID TIPPER.** *Wireless Personal Area Networks,* 28 January 2014, http://www.pitt.edu/~dtipper/2700/2700_Slides11K.pdf